# EUROPEAN PATENT APPLICATION

(11) **EP 4 276 152 A1**
(43) Date of publication of application: **15.11.2023**
(21) Application number: 22736626.7
(22) Date of filing: 10.01.2022
(51) Int. Cl.: C09D 1/00, C09D 7/61

(54) **AEROGEL COATING AND PREPARATION METHOD THEREFOR, AND AEROGEL COATING LAYER AND PREPARATION METHOD THEREFOR**

(30) Priority: 11.01.2021 CN 202110034734
(71) Applicant: China Nuclear Power Technology Research Institute Co., Ltd, Shenzhen, Guangdong 518031 (CN); China General Nuclear Power Corporation, Shenzhen, Guangdong 518028 (CN); CGN Power Co., Ltd., Shenzen, Guangdong 518028 (CN); Ling Dong Nuclear Power Co., Ltd, Shenzhen, Guangdong 518000 (CN)
(72) Inventor: ZHAO, Yuan, Shenzhen, Guangdong 518031 (CN); QIU, Ruoxiang, Shenzhen, Guangdong 518031 (CN); WEI, Huanyi, Shenzhen, Guangdong 518031 (CN); DUAN, Chengjie, Shenzhen, Guangdong 518031 (CN); LIN, Jiming, Shenzhen, Guangdong 518031 (CN)
(74) Representative: Noble, Nicholas
(86) International application number: PCT/CN2022/071071
(87) International publication number: WO 2022/148465

(57) **Abstract**

The present disclosure relates to an aerogel coating material and a preparation method therefor, and an aerogel coating layer and a preparation method therefor. The method for preparing the aerogel coating material includes following steps: firstly mixing a slag powder, fly ash, and sodium silicate at a mass ratio of 4: (0.2-4): (0.5-2) to obtain a dry powder, and then mixing the dry powder and water to obtain a geopolymer slurry, wherein the mass ratio of the dry powder to water is 1: (0.2-0.5); and mixing an aerogel powder and the geopolymer slurry to obtain the aerogel coating material. The method for preparing the aerogel coating material can allow the prepared aerogel coating material to have good adhesiveness, high-temperature resistance, and heat preservation performance.

## Description

### CROSS-REFERENCE TO RELATED APPLICATION

This application claims priority to Chinese patent application No. 202110034734.1, filed with the China National Intellectual Property Administration on January 11, 2021, entitled "AEROGEL COATING MATERIAL AND PREPARATION METHOD THEREFOR, AND AEROGEL COATING MATERIAL LAYER AND PREPARATION METHOD THEREFOR", the content of which is hereby incorporated by reference in its entirety.

### TECHNICAL FIELD

The present disclosure relates to the technical field of aerogel coating materials, in particular to an aerogel coating material and a method for preparing the same, an aerogel coating layer and a method for preparing the same.

### BACKGROUND

Conventional aerogel coating materials mostly contain organic binder components, which have the advantage of good adhesiveness but have the problems of being unable to withstand long-term heating and prone to ageing and detachment. For example, a method for preparing a silicon dioxide aerogel coating material is disclosed in conventional art, in which a silicon dioxide aerogel powder, an organic binder, a curing agent, and a film-forming auxiliary agent as raw materials are stirred and grinded to obtain the silicon dioxide aerogel coating material. The characteristics are in that the composition allows the coating material to well bond with a substrate, which can achieve effective thermal insulation and reduce deformation under explosion, thus providing protecting function, and the preparation process is simple and has a low cost. However, the binder used in this method is mainly an organic component such as waterborne polyurethane, with the defects of poor heat and ageing resistance. The binder can be decomposed by heat and lose its adhesiveness at an over high temperature, resulting detachment of the adhered substances and causing decreased heat preservation performance after long-term use.

The conventional art also discloses another preparation method, which prepares an aerogel coating material by adopting a composition composed of a free epoxy modified resin, a phenolic modified resin, a silicone modified resin, and a silicone rubber as a coating matrix, with aerogel particles as a functional filler and polyvinyl alcohol as an additive. The aerogel coating material prepared by this method has good dispersibility, stability, heat resistance, and thermal insulation performance. However, the coating matrix used in this method also has the problem of limited adhesiveness and limited heat resistance for long-term use. The coating matrix is prone to detachment when used for a long time or subjected to a large impact of external force, and is not suitable for using at a high temperature for a long time.

Therefore, the aerogel coating materials with inorganic binders to replace the organic binders have gradually emerged. For example, a technology discloses a method for preparing a porous geopolymer composite thermal-insulation board, using silica-alumina clay and/or industrial solid wastes and high-calcium fly ash as the main raw materials, a phosphoric acid and an organic ternary acid as compound activators, and hydrogen peroxide and a foam stabilizer as foaming agents,. On this basis, a SiO₂ aerogel/porous geopolymer composite thermal-insulation board is prepared by in-situ impregnation via the sol-gel method and modification with a water repellent. The SiO₂ aerogel/porous geopolymer composite thermal-insulation board prepared by this method has light weight, good heat preservation performance, high compressive strength, high fire resistance, and good waterproofing performance. Meanwhile, the preparation method has low energy consumption and low production cost, making it favorable for industrial application. However, the composite heat-insulation board prepared by this method has problems that the aerogel has limited contact with the porous geopolymer composite heat-insulation board, and the doping amount of aerogel is small, resulting limited heat preservation effect. In addition, the board shaped material has poor adhesive and coating performances, and is difficult to be applied on irregular surfaces and containers for adhesion and heat preservation.

### SUMMARY

On this basis, there is a need to provide a method for preparing an aerogel coating material with good adhesiveness, high-temperature resistance, and heat preservation effect.

Further, there is also a need to provide an aerogel coating material, an aerogel coating layer, and a method for preparing the aerogel coating layer.

A method for preparing an aerogel coating material includes following steps:
mixing a slag powder, fly ash, and sodium silicate at a mass ratio of 4: (0.2-4): (0.5-2) to obtain a dry powder, and then mixing the dry powder with water to obtain a geopolymer slurry, wherein a mass ratio of the dry powder to the water is 1: (0.2-0.5); and
mixing an aerogel powder and the geopolymer slurry to obtain the aerogel coating material.

In one of embodiments, in the step of mixing the aerogel powder and the geopolymer slurry, the aerogel powder and the geopolymer slurry are mixed by mechanical stirring or peristaltic stirring.

In one of embodiments, the mechanical stirring or the peristaltic stirring is carried out for 1 min to 20 mins.

In one of embodiments, before the step of mixing the aerogel powder and the geopolymer slurry by mechanical stirring or peristaltic stirring, the method further includes a step of adding the aerogel powder into the geopolymer slurry by directly adding or spraying.

In one of embodiments, the volume ratio of the geopolymer slurry to the aerogel powder is 1: (1-5).

In one of embodiments, the aerogel powder is silicon dioxide aerogel powder.

In one of embodiments, the method further includes a step of preparing the aerogel powder. The step of preparing the aerogel powder includes:
mixing a silicon source, water and an alcohol solvent to obtain a silica gel, then subjecting the silica gel to ageing and drying to obtain an aerogel block; and
pulverizing the aerogel block to obtain the aerogel powder.

In one of embodiments, before pulverizing the aerogel block, the method further includes a step of heat-treating the aerogel block at a temperature of 400°C to 700°C for 0.5 hours to 5 hours.

In one of embodiments, the step of mixing the silicon source, the water and the alcohol solvent to obtain the silica gel includes:
mixing the silicon source, the alcohol solvent and the water at a molar ratio of 1:(10-20): (3-15) to obtain a mixture, and then adjusting the mixture to a pH value of 2 to 4, to obtain a sol; and
adjusting the sol to a pH value of 8 to 10, to obtain the silica gel.

In one of embodiments, before adjusting the sol to a pH value of 8 to 10, the method further includes a step of mixing and stirring the sol and a silicon carbide powder.

In one of embodiments, the molar ratio of the silicon carbide powder to the silicon source is (1-10): 100.

In one of embodiments, the ageing is carried out for 24 hours to 72 hours; and/or the drying is carried out by carbon dioxide supercritical drying at a temperature of 32°C to 50°C and a pressure of 7.4 MPa to 18 MPa.

An aerogel coating material is prepared by the method as described above.

A method for preparing an aerogel coating layer includes following steps:
coating the aerogel coating material as described above on a substrate, and curing the aerogel coating material to allow the aerogel coating material to attach to the substrate, thereby obtaining the aerogel coating layer.

In one of embodiments, the curing step includes curing the aerogel coating material at 40°C to 100°C in steam for 4 hours to 24 hours. Alternatively, the curing step includes standardized curing at a temperature of 17°C to 23°C and humidity equal to or greater than 90% for 1 day to 28 days.

An aerogel coating layer is prepared by the method as described above.

According to the above-mentioned method for preparing the aerogel coating material, the slag powder, the fly ash, the sodium silicate and water are mixed at a specific ratio to obtain a geopolymer slurry, and the geopolymer slurry are mixed with the aerogel powder to obtain the aerogel coating material. The geopolymer slurry has the characteristics of high compressive strength of 30 MPa to 100 MPa, high-temperature resistance equal to or greater than 800°C, and strong adhesiveness being 2 to 3 times of that of ordinary cement. Therefore, the prepared aerogel coating material has good high-temperature resistance, good ageing resistance and strong adhesiveness. In addition, the aerogel powder as a thermal insulation matrix has a low density, a high porosity, and many interfaces, thereby having a limitation on the mean free path of molecules and a low solid-state thermal conductivity. Moreover, the porous network structure of the aerogel powder is mostly mesoporous and the pore size of the aerogel powder is smaller than the mean free path of gas molecules, which is conducive to inhibiting gaseous-heat conduction, so that the thermal conductivity at room temperature is lower than that of conventional thermal insulation materials, thereby achieving the efficient heat preservation effect. Therefore, in the above-mentioned method for preparing the aerogel coating material, the geopolymer slurry and the aerogel powder are mixed to obtain the aerogel coating material, allowing the obtained aerogel coating material to have good adhesiveness, high-temperature resistance and heat preservation performance.

### BRIEF DESCRIPTION OF THE DRAWINGS

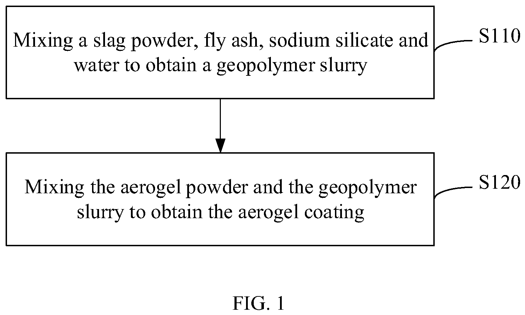

FIG. 1 is a flow chart of a method for preparing an aerogel coating material according to an embodiment.

### DETAILED DESCRIPTION

In order to facilitate the understanding of the present disclosure, the following will fully describe the present disclosure in combination with specific embodiments. The specific embodiments show the favorable examples of the present disclosure. However, the present disclosure can be implemented in many different ways and is not limited to the examples described herein. On the contrary, the purpose of providing these embodiments is to make the understanding of the present disclosure more thorough and comprehensive.

Unless otherwise defined, all technical and scientific terms used herein have the same meaning as commonly understood by one of ordinary skill in the technical field of the present disclosure. The terminology used herein in the description of the present disclosure is merely for the purpose of describing specific examples, and is not intended to limit the present disclosure.

With reference to FIG. 1, a method for preparing an aerogel coating material according to an embodiment includes the following steps.

Step S110: mix a slag powder, fly ash, sodium silicate, and water together to obtain a geopolymer slurry.

The step of mixing a slag powder, fly ash, sodium silicate and water together includes mixing the slag powder, the fly ash, and the sodium silicate together at a mass ratio of 4: (0.2-4): (0.5-2) to obtain a dry powder, and then mixing the dry powder and the water together at a mass ratio of 1: (0.2-0.5).

Specifically, the slag powder, the fly ash, and the sodium silicate are mixed together in a dry powder mixer.

In the step of mixing the dry powder and the water together, the dry powder and the water are stirred in a high-speed mixer for 2 minutes to 10 minutes, thereby obtaining the evenly mixed geopolymer slurry without large particles.

The obtained geopolymer slurry has the advantages of high compressive strength of 30 MPa to 100 MPa, high temperature resistance equal to or greater than 800°C, and strong adhesiveness being 2 to 3 times of that of ordinary cement. Compared with conventional aerogel coating materials that use organic components or even inorganic components such as cement as binders, the above-described geopolymer slurry has the characteristics of high mechanical properties, high-temperature resistance, ageing resistance, and strong adhesiveness. The obtained aerogel coating material can effectively solve the problem that conventional aerogel materials cannot withstand long time heating and are prone to ageing and detachment.

Step S120: mix an aerogel powder and the geopolymer slurry to obtain the aerogel coating material.

Specifically, the aerogel powder and the geopolymer slurry are mixed together by mechanical stirring or peristaltic stirring. Further, the peristaltic mixing is performed by using a peristaltic mortar machine. The process parameters in the peristaltic stirring process can be those commonly used in the art, and will not be repeated herein.

The volume ratio of the geopolymer slurry to the aerogel powder is 1: (1-5). In one of embodiments, the volume ratio of the geopolymer slurry to the aerogel powder is 1:1, 1:2, 1:3, 1:4 or 1:5. It can be understood that the volume of the aerogel powder can be measured with a graduated cylinder.

Specifically, the mechanical stirring or the peristaltic stirring is carried out for 1 min to 20 mins. In one of embodiments, the mechanical stirring or the peristaltic stirring is carried out for 1 min, 5 mins, 10 mins, 15 mins or 20 mins.

Preferably, before mixing the aerogel powder with the geopolymer slurry by mechanical stirring or peristaltic stirring, the method further includes a step of adding the aerogel powder into the geopolymer slurry by directly adding or spraying. By adding the aerogel powder to the geopolymer slurry and then mixing them, the geopolymer slurry and the aerogel powder can be evenly and fully mixed, which solves the problems that the aerogel exists in a small proportion and is distributed unevenly, so that the prepared aerogel coating material has good heat preservation performance.

Specifically, the aerogel powder has a low density, a high porosity, and many interfaces, which has a limitation on the mean free path of molecules and has a low solid-state thermal conductivity. Moreover, the porous network structure of the aerogel powder is mostly mesoporous and the pore size of the aerogel powder is smaller than the mean free path of gas molecules, which is conducive to inhibiting gaseous-heat conduction, so that the thermal conductivity at room temperature is lower than that of conventional thermal insulation materials, thereby achieving efficient heat preservation effect.

Preferably, the aerogel powder is silicon dioxide aerogel powder. Elements such as Al, Si, and O in the geopolymer slurry can form a stable three-dimensional structure with the Si and O components in the silicon dioxide aerogel, so that the prepared aerogel coating material not only has good high-temperature resistance and ageing resistance, but also has strong mechanical performance, which solves the problem of poor mechanical performance of conventional aerogel coating materials.

Before performing the step S120, the method further includes a step of preparing the aerogel powder. The step of preparing the aerogel powder includes: mixing a silicon source, water and an alcohol solvent together to obtain a silica gel, then subjecting the silica gel to ageing and drying to obtain an aerogel block; and pulverizing the aerogel block to obtain the aerogel powder.

The step of mixing the silicon source, the water and the alcohol solvent together to obtain the silica gel includes steps of mixing the silicon source, the alcohol solvent and the water together at a molar ratio of 1:(10-20): (3-15) to obtain a mixture, and then adjusting the mixture to a pH value of 2 to 4, to obtain a sol; and adjusting the sol to a pH value of 8 to 10, to obtain the silica gel.

Before adjusting the sol to a pH value of 8 to 10, the method further includes a step of mixing and stirring the sol and a silicon carbide powder. By adding the silicon carbide powder as an opacifier into the aerogel matrix, the radiation heat transfer at a high temperature can be effectively reduced, so that the aerogel coating material still has efficient heat preservation performance in a high temperature environment.

Preferably, the molar ratio of the silicon carbide powder to the silicon source is (1-10):100. In one of embodiments, the molar ratio of the silicon carbide powder to the silicon source is 1:100, 2:100, 5:100, 8:100 or 10:100.

Specifically, the silicon source is tetraethyl orthosilicate, tetramethyl orthosilicate or tetrabutyl orthosilicate. Preferably, the silicon source is tetraethyl orthosilicate.

The alcoholic solvent is ethanol, methanol or propanol. Preferably, the alcoholic solvent is ethanol.

Specifically, in adjusting the mixture to a pH value of 2 to 4, an acidic reagent is added to adjust the pH value. For example, the acidic reagent is hydrochloric acid, nitric acid, etc. Preferably, the acidic reagent is hydrochloric acid.

In adjusting the sol to a pH value of 8 to 10, an alkaline reagent is added to adjust the pH value. For example, the alkaline reagent is ammonia water, sodium hydroxide, potassium hydroxide, etc. Preferably, the acidic reagent is ammonia water.

Preferably, the ageing is carried out for 24 hours to 72 hours.

The drying is carried out by carbon dioxide supercritical drying at a temperature of 32°C to 50°C and a pressure of 7.4 MPa to 18 MPa. Compared with the vacuum drying and the normal pressure drying, the use of the carbon dioxide supercritical drying shortens the time period for modification of material surfaces and reduces collapse of the internal pore size of the material during the drying process, so that the aerogel coating material has better thermal insulation and mechanical performances.

Specifically, before pulverizing the aerogel block, the method further includes heat-treating the aerogel block at a temperature of 400°C to 700°C for 0.5 hours to 5 hours. In one of embodiments, the temperature for heat treatment is 400°C, 500°C, 600°C or 700°C. Specifically, the step of heat treatment is carried out in a tube furnace.

The aerogel block is heat-treated to enhance the stability of the skeleton structure of the aerogel material, thereby preventing the material from decrease of heat preservation performance due to the structural damage at higher temperature, so that the aerogel powder has better high-temperature resistance and heat preservation and thermal insulation performances.

It can be understood that the aerogel powder can be purchased directly. Alternatively, the aerogel powder can be obtained by heat treating and ball-milling purchased aerogel blocks.

The above-mentioned aerogel coating material preparation method at least has the following advantages.
(1) According to the above-mentioned aerogel coating material preparation method, the slag powder, the fly ash, the sodium silicate and water are mixed at a specific ratio to obtain a geopolymer slurry. The geopolymer slurry has the characteristics of high compressive strength of 30 MPa to 100 MPa, high temperature resistance equal to or greater than 800°C, and strong adhesiveness being 2 to 3 times of that of ordinary cement. Meanwhile, elements such as Al, Si, and O in the geopolymer slurry can form a stable three-dimensional structure with the Si and O components in the silicon dioxide aerogel, so that the prepared aerogel coating material has good high-temperature resistance and ageing resistance, which effectively solve the problem that conventional aerogel materials cannot withstand long-term heating and are prone to ageing and detachment. By mixing the aerogel powder and the geopolymer slurry, the problems that the aerogel exists in a small proportion and is distributed unevenly are solved, so that the prepared aerogel coating material as a thermal insulation material has a lighter weight and a better heat preservation effect. Moreover, the peristaltic stirring or the mechanical stirring will not destroy the internal pore structure of the aerogel powder, and therefore the thermal insulation performance of the aerogel coating material is greatly improved. In addition, the aerogel as a thermal insulation matrix has a low density, a high porosity, and more interfaces, thereby having a limitation on the mean free path of molecules and a low solid-state thermal conductivity. Moreover, the porous network structure of the aerogel powder is mostly mesoporous and the pore size of the aerogel powder is smaller than the mean free path of gas molecules, which is conducive to inhibiting gaseous-heat conduction, so that the thermal conductivity at room temperature is lower than that of conventional thermal insulation materials, thereby achieving efficient heat preservation effect. Therefore, the aerogel coating material prepared by the above-mentioned method can have good adhesiveness, high-temperature resistance, and heat preservation performance.
(2) Unlike the thermal insulation felts or boards, through the design of the aerogel coating material, the aerogel coating material prepared by the above-mentioned method can be conveniently coated on the surfaces of various irregularly shaped materials. In addition, the aerogel coating material can be tightly adhered to the interface due to its strong bonding property, which greatly expands the application range of the material, reduces the difficulty of implementation, and has a broad application field, and is especially suitable for the heat preservation of pipeline equipment having restricted space and weight, and irregular shapes.
(3) In the process of preparing the above-mentioned aerogel coating material, the silicon carbide powder is added as an opacifier, and the addition amount of the opacifier and the compositing method are optimized, and therefore the radiation heat transfer can be effectively reduced, so that the problem of heat transfer that occurs at high temperature caused by heat radiation and conduction is solved. Thus, the heat preservation performance of the aerogel coating material at high temperature is effectively improved.
(4) In the process of preparing the above-mentioned aerogel coating material, the aerogel block is heat-treated to enhance the stability of the skeleton structure of the aerogel material, thereby preventing the material from decrease of heat preservation performance due to the structural damage at high temperature, so that the aerogel powder has better high-temperature resistance and heat preservation performance.
(5) Factors such as the composition and proportion of the geopolymer slurry, the compositing method and ratio between the geopolymer slurry and the aerogel powder, and the like, have a great influence on the uniformity and heat preservation performance of the final aerogel coating material. In the above-mentioned aerogel coating material preparation method, through adjusting the ratio between water and aerogel and improving the mixing measure, the aerogel material and the geopolymer material are mixed evenly, and the geopolymer components and the aerogel components form a stable three-dimensional structure, therefore the uniformity and mechanical performance of the aerogel coating material are further improved.
(6) In the above-mentioned aerogel coating material preparation method, the slag-based geopolymer is used as a binder. The raw materials are easy to obtain and cost-effective, exhibiting the characteristics of low cost and high performance.

An embodiment of an aerogel coating material is prepared by the above-mentioned method. The aerogel coating material has strong adhesiveness, good high-temperature resistance, and good thermal insulation and heat preservation performances. In addition, the aerogel coating material can be conveniently coated on the surfaces of various materials with irregular shapes. The aerogel coating material can be tightly adhered to the interface due to its strong bonding property, which greatly expands the application range of the material, reduces the difficulty of implementation, and has a broad application field, and is especially suitable for the heat preservation of pipeline equipment having restricted space and weight, and irregular shapes.

An embodiment of a method for preparing an aerogel coating material layer includes steps of: coating material the above-mentioned aerogel coating material on a substrate and curing the aerogel coating material to allow the aerogel coating material to attach to the substrate, thereby obtaining the aerogel coating layer.

Specifically, the curing step includes curing the aerogel coating material at 40°C to 100°C with steam for 4 hours to 24 hours. Alternatively, the curing step includes a standardized curing under the conditions of a temperature of 17°C to 23°C and humidity equal to or greater than 90% for 1 day to 28 days.

The above-mentioned method for coating material the aerogel coating material is simple and easy to carry out. By the above-mentioned method, the aerogel coating material can be firmly coated on the surfaces of various substrates with regular or irregular shapes.

In one embodiment, an aerogel coating layer is prepared by the aerogel coating layer preparation method in the above embodiments.

The specific examples are described as follows.

### Example 1

The aerogel coating material in this example was prepared according to the following method.
(1) Tetraethyl orthosilicate and ethanol were mixed evenly to form solution A, and then deionized water was dropwisely added into the solution A. The molar ratio of the ethyl orthosilicate, the ethanol, and the water was 1:10:5. The mixture was adjusted to a pH value of 2 with hydrochloric acid to form a sol. After that, ammonia water was added to adjust the pH value to 8 to obtain a silica gel. Then, the silica gel was subjected to ageing in ethanol for 2 days and dried with supercritical CO₂ under the temperature of 40°C and the pressure of 9 MPa to obtain an aerogel block.
(2) The aerogel block was heat-treated in a tube furnace at the temperature of 500°C for 1 hour to obtain a high-temperature resistant aerogel block, which was pulverized via ball milling to obtain an aerogel powder.
(3) Blast furnace slag was ground into fine slag powder by means of ball milling and physical sieving. The fine slag powder, fly ash, and instant soluble sodium silicate powder at a mass ratio of 4:1:1 were uniformly mixed in a dry powder mixer to obtain dry powder A. The dry powder A was added with water (a mass ratio of dry powder A to water is 2:1) and uniformly stirred to obtain a geopolymer slurry.
(4) The aerogel powder in equal volume with the geopolymer was weighed. The aerogel powder and the geopolymer slurry were mixed with a sprayer and uniformly stirred by peristaltic stirring for 8 minutes to obtain the aerogel coating material.

The aerogel coating layer in this example was prepared according to the following method.

The above-mentioned aerogel coating material was coated on a surface of a material, and then cured for 15 days through a standardized curing method (the temperature is 20°C and the humidity is 90%), allowing the aerogel coating material to firmly attach to the surface of the coated material, thereby obtaining the aerogel coating layer.

### Example 2

The aerogel coating material in this example was prepared according to the following method.
(1) Tetraethyl orthosilicate and ethanol were mixed evenly to form solution A, and then deionized water was dropwisely added into the solution A. The molar ratio of the ethyl orthosilicate, the ethanol, and the water was 1:10:5. The mixture was adjusted to a pH value of 2 to form a sol. After that, SiC powder was added (a molar ratio of SiC to tetraethyl orthosilicate was 0.06:1), and then constantly stirred for dispersion to form a sol. After that, ammonia water was added to adjust the pH value to 8 to obtain a silica gel. Then, the silica gel was subjected to ageing in ethanol for 2 days and dried with supercritical CO₂ under the temperature of 40°C and the pressure of 9 MPa to obtain an aerogel block.
(2) The aerogel block was heat-treated in a tube furnace at the temperature of 500°C for 1 hour to obtain a high-temperature resistant aerogel block, which was pulverized via ball milling to obtain an aerogel powder.
(3) Blast furnace slag was ground into fine slag powder by means of ball milling and physical sieving. The fine slag powder, fly ash, and instant soluble sodium silicate powder at a mass ratio of 4:1:1 were uniformly mixed in a dry powder mixer to obtain dry powder A. The dry powder A was added with water (a mass ratio of dry powder A to water is 2:1) and uniformly stirred to obtain a geopolymer slurry.
(4) The aerogel powder in a volume that was twice the volume of the geopolymer was weighed. The aerogel powder and the geopolymer slurry were mixed with a sprayer and uniformly stirred by peristaltic stirring for 8 minutes to obtain the aerogel coating material.

The aerogel coating layer in this example was prepared according to the following method.

The above-mentioned aerogel coating material was coated on a surface of a material, and then cured for 15 days through a standardized curing method (the temperature is 20°C and the humidity is 90%), allowing the aerogel coating material to firmly attach to the surface of the coated material, thereby obtaining the aerogel coating layer.

### Example 3

The method for preparing the aerogel coating material in this example was similar to the method for preparing the aerogel coating material in Example 2, with the difference in step (4). In step (4) of this example, the aerogel powder in a volume that was three times the volume of the geopolymer was weighed, and the aerogel powder and the geopolymer slurry were mixed with a sprayer and uniformly stirred by peristaltic stirring for 8 minutes to obtain the aerogel coating material.

The aerogel coating layer in this example was prepared according to the method identical to the method for preparing the aerogel coating layer in Example 2.

### Example 4

The method for preparing the aerogel coating material in this example was similar to the method for preparing the aerogel coating material in Example 2, with the difference in step (4). In step (4) of this example, the aerogel powder in a volume that was four times the volume of the geopolymer was weighed, and the aerogel powder and the geopolymer slurry were mixed with a sprayer and uniformly stirred by peristaltic stirring for 8 minutes to obtain the aerogel coating material.

The aerogel coating layer in this example was prepared according to the method identical to the method for preparing the aerogel coating layer in Example 2.

### Example 5

The method for preparing the aerogel coating material in this example was identical to the method for preparing the aerogel coating material in Example 2, which will not be repeated.

The aerogel coating layer in this example was prepared by coating material the aerogel coating material on a surface of a material, which was then cured for 1 day through a standardized curing method (the temperature is 20°C and the humidity is 90%), allowing the aerogel coating material to firmly attach to the surface of the coated material, thereby obtaining the aerogel coating layer.

### Example 6

The method for preparing the aerogel coating material in this example was identical to the method for preparing the aerogel coating material in Example 2, which will not be repeated. The aerogel coating layer in this example was prepared by coating material the aerogel coating material on a surface of a material, which was then cured in steam at 80°C for 4 hours to allow the aerogel coating material to firmly attach to the surface of the coated material, thereby obtaining the aerogel coating layer.

### Example 7

The method for preparing the aerogel coating material in this example was similar to the method for preparing the aerogel coating material in Example 1, with the difference in step (4). In step (4) of this example, the aerogel powder was directly added into the geopolymer slurry, and the aerogel powder and the geopolymer slurry were uniformly mixed by mechanical stirring to obtain the aerogel coating material.

The aerogel coating layer in this example was prepared according to the method identical to the method for preparing the aerogel coating layer in Example 1.

### Comparative Example 1

The method for preparing the aerogel coating material in this Comparative Example 1 was similar to the method for preparing the aerogel coating material in Example 1, with the difference in step (3). In step (3) of this Comparative Example 1, the blast furnace slag was ground into fine slag powder by means of ball milling and physical sieving. The fine slag powder, fly ash, and instant soluble sodium silicate powder a mass ratio of 4:1:0.2 were uniformly mixed in a dry powder mixer to obtain dry powder A. The dry powder A was added with water (a mass ratio of dry powder A to water is 8:1) and uniformly stirred to obtain a geopolymer slurry.

The aerogel coating layer in this Comparative Example 1 was prepared according to the method identical to the method for preparing the aerogel coating layer in Example 1.

The performances of the aerogel coating layers prepared in Examples 1 to 7 and Comparative Example 1 were tested. The test results are shown in Table 1 below. The test methods were as follows. The high-temperature resistance test was performed by calcination of a material at 800°C for not less than 6 hours. The performances of the material after testing still meet the performance index requirements. The thermal conductivity at room temperature of the aerogel coating layers was tested according to the GB /T 10295-2008 test standard. The thermal conductivity at 800°C of the aerogel coating layers was tested according to the YB/T 4130-2005 test standard. The compressive strength of the aerogel coating layers was tested according to the GB/T 1964-1996 test standard. The bonding strength of the aerogel coating layers was measured by the TCH-3000 bonding strength puller.

**Table 1 Test results of performances of aerogel coating layers**

| | Temperature resistance °C | Thermal conductivity at 25°C (W/m·K) | Thermal conductivity at 800°C (W /m·K) | Bonding strength (M Pa) | Compressive strength M Pa |
|---|---|---|---|---|---|
| Example 1 | 800 | 0.050 | 0.090 | 0.30 | 9.82 |
| Example 2 | 800 | 0.040 | 0.070 | 0.24 | 8.65 |
| Example 3 | 800 | 0.035 | 0.062 | 0.15 | 6.34 |
| Example 4 | 800 | 0.031 | 0.054 | 0.10 | 3.81 |
| Example 5 | 800 | 0.040 | 0.070 | 0.14 | 6.9 |
| Example 6 | 800 | 0.040 | 0.070 | 0.28 | 9.2 |
| Example 7 | 800 | 0.053 | 0.092 | 0.25 | 9.5 |
| Comparative Example 1 | 600 | 0.058 | - | <0.05 | <2 |

It can be seen from the above Table 1 that the aerogel coating layers prepared in Examples 1 to 7 exhibit good high-temperature resistance, low thermal conductivity at room temperature and at 800°C, good heat preservation performance, high bonding strength and high compressive strength. However, the aerogel coating layer of Comparative Example 1 can merely withstand 600°C, exhibiting poor high-temperature resistance. Its bonding strength and compressive strength are far inferior to those of the aerogel coating layers in Examples 1 to 7. Its thermal conductivity at room temperature is higher than that of the aerogel coating layers in Examples 1 to 7. Its heat preservation performance is lower than that of the aerogel coating layers in Examples 1 to 7. In addition, as can be seen from the comparison between Examples 2 to 4, the bonding strength and compressive strength of the aerogel coating layer decrease slightly and the heat preservation performance greatly improves when the addition amount of the aerogel powder increases and other conditions remain unchanged.

The technical features of the above-mentioned embodiments can be combined arbitrarily. To make the description concise, not all possible combinations of the technical features of the above-mentioned embodiments have been described. However, the combinations of these technical features should be considered to be within the scope of this specification as long as they are not contradicted.

The above-mentioned embodiments only express several implementation modes of the present disclosure, which are described in a specific and detailed manner, but they should not be construed as limiting the scope of the present disclosure. It should be pointed out that those skilled in the art can make several modifications and improvements without departing from the concept of the present disclosure, and these all belong to the protection scope of the present disclosure. Therefore, the protection scope of the present disclosure should be based on the appended claims.

## Claims

1. A method for preparing an aerogel coating material, comprising:
mixing a slag powder, fly ash, and sodium silicate at a mass ratio of 4: (0.2-4): (0.5-2) to obtain a dry powder, and then mixing the dry powder and water to obtain a geopolymer slurry, wherein a mass ratio of the dry powder to the water is 1: (0.2-0.5); and
mixing an aerogel powder and the geopolymer slurry to obtain the aerogel coating material.

2. The method according to claim 1, wherein during the mixing of the aerogel powder and the geopolymer slurry, the aerogel powder and the geopolymer slurry are mixed by mechanical stirring or peristaltic stirring.

3. The method according to claim 2, wherein the mechanical stirring or the peristaltic stirring is carried out for 1 min to 20 mins.

4. The method according to claim 2, wherein before mixing the aerogel powder and the geopolymer slurry by mechanical stirring or peristaltic stirring, the method further comprises adding the aerogel powder into the geopolymer slurry by directly adding or spraying.

5. The method according to claim 1, wherein a volume ratio of the geopolymer slurry to the aerogel powder is 1: (1-5).

6. The method according to any one of claims 1 to 5, wherein the aerogel powder is silicon dioxide aerogel powder.

7. The method according to any one of claims 1 to 5, further comprising a step of preparing the aerogel powder, wherein the step of preparing the aerogel powder comprises:
mixing a silicon source, water, and an alcohol solvent to obtain a silica gel, then subjecting the silica gel to ageing and drying to obtain an aerogel block; and
pulverizing the aerogel block to obtain the aerogel powder.

8. The method according to claim 7, before pulverizing the aerogel block, further comprising heat-treating the aerogel block at a temperature of 400°C to 700°C for 0.5 hours to 5 hours.

9. The method according to claim 7, wherein the mixing the silicon source, the water, and the alcohol solvent to obtain the silica gel comprises:
mixing the silicon source, the alcohol solvent, and the water at a molar ratio of 1:(10-20): (3-15) to obtain a mixture, and then adjusting the mixture to a pH value of 2 to 4, to obtain a sol; and
adjusting the sol to a pH value of 8 to 10, to obtain the silica gel.

10. The method according to claim 9, before adjusting the sol to a pH value of 8 to 10, further comprising mixing and stirring the sol and a silicon carbide powder.

11. The method according to claim 10, wherein a molar ratio of the silicon carbide powder to the silicon source is (1-10): 100.

12. The method according to claim 7, wherein the ageing is carried out for 24 hours to 72 hours; and/or
the drying is carried out by carbon dioxide supercritical drying at a temperature of 32°C to 50°C and a pressure of 7.4 MPa to 18 MPa.

13. An aerogel coating material prepared by the method according to any one of claims 1 to 12.

14. A method for preparing an aerogel coating layer, comprising:
coating material the aerogel coating material according to claim 13 on a substrate, and curing the aerogel coating material to allow the aerogel coating material to attach to the substrate, thereby obtaining the aerogel coating layer.

15. The method according to claim 14, wherein the curing comprises curing the aerogel coating material at 40°C to 100°C in steam for 4 hours to 24 hours, or
the curing comprises standardized curing under conditions of a temperature of 17°C to 23°C and humidity equal to or greater than 90% for 1 day to 28 days.

16. An aerogel coating layer prepared by the method according to claim 14 or 15.
